# EUROPÄISCHE PATENTANMELDUNG

(11) **EP 3 273 344 A1**
(43) Veröffentlichungstag der Anmeldung: **24.01.2018**
(21) Anmeldenummer: 16180171.7
(22) Anmeldetag: 19.07.2016
(51) Int. Cl.: G06F 9/44, G06F 9/45

(54) **VERFAHREN UND PROGRAMMIEREINRICHTUNG ZUR OPTIMIERUNG VON QUELLCODE FÜR EIN COMPUTERPROGRAMM**

(71) Anmelder: Siemens Aktiengesellschaft, 80333 München (DE)
(72) Erfinder: Sand, Markus, 90480 Nürnberg (DE)

(57) **Zusammenfassung**

Die Erfindung betrifft ein Verfahren und eine Programmiereinrichtung zur Optimierung von Quellcode für ein Computerprogramm einer industriellen Automatisierungskomponente, wobei der Quellcode mit einer Vielzahl von Anweisungen erstellt und in einem Übersetzungsvorgang in Zwischencode und/oder ausführbaren Code umgesetzt wird. Dabei wird während oder nach dem Erstellen des Quellcodes eine Datenflussanalyse des Quellcodes durchgeführt, wobei solche Anweisungen, welche nicht zur Ausführung kommen können, im Quellcode markiert werden. Durch ein solches Verfahren wird es einem Benutzer oder einem Optimierungsmodul ermöglicht, Fehler im Programmcode aufzufinden und den Programmcode von nicht erreichbaren Anweisungen zu bereinigen, so dass sich ein besseres und übersichtlicheres Programm ergibt.

## Beschreibung

Die Erfindung betrifft ein Verfahren zur Optimierung von Quellcode für ein Computerprogramm einer industriellen Automatisierungskomponente gemäß dem Oberbegriff des Patentanspruchs 1, und eine Programmiereinrichtung zur Erstellung von Quellcode für ein Computerprogramm einer industriellen Automatisierungskomponente gemäß dem Oberbegriff des Patentanspruchs 8.

Im Zuge der Erstellung von Computerprogrammen wird in der Regel Quellcode von einem Benutzer, oder von einem Programmgenerator erzeugt oder vorbereitet, der in einigen Fällen direkt zur Ausführung kommt (Interpreter-Sprache), in den meisten Fällen jedoch in einen Zwischencode und letztendlich in einen ausführbaren Programmcode (object code; machine program) übersetzt (compiliert) wird.

Computerprogramme bestehen dabei praktisch nie aus einem einzigen Stück linear ablaufendem Programmcode, sondern enthalten regelmäßig bedingte Verzweigungen, Sprunganweisungen, Aufrufe von Unterprogrammen etc., die im Folgenden kurz mit dem Oberbegriff "Verzweigungen" benannt werden sollen.

Ein Problem solcher Verzweigungen ist, dass diese den Quellcode potentiell unübersichtlich machen, was dazu führen kann, dass im Quellcode und in dem daraus erzeugten Zwischencode bzw. ausführbaren Code letztlich einzelne Anweisungen oder gar ganze Passagen enthalten sein können, die aufgrund der Verzweigungen im ausführbaren Programm nicht erreicht werden können, weil sie beispielsweise mittels Sprunganweisungen übersprungen werden, oder weil die Ausführung dieser Teile mit einer Bedingung verknüpft ist, die niemals eintreten kann. Neben der Unübersichtlichkeit hat dies außerdem zur Folge, dass der Programmcode (Quellcode, Zwischencode, ausführbarer Code) unnötig Ressourcen allokiert Speicher belegt etc. Ein weiterer Nachteil besteht darin, dass das Überspringen oder Auslassen von Anweisungen unabsichtlich geschieht und einen nicht bemerkten Fehler darstellt.

Moderne Compiler sind zwar oft in der Lage, für solche Stellen und Anweisungen im Programmcode (Quellcode) bei der Code-Generierung (Compilierung) erst überhaupt keinen ausführbaren Programmcode zu generieren, womit ein Teil der Nachteile behoben ist. Allerdings erfolgt dies auf einer abstrakteren Ebene, und der Benutzer erhält keine Information darüber, dass Teile des von ihm erstellten oder geänderten Programmcodes (Quellcodes) erst gar nicht übersetzt worden sind.

Es ist also eine Aufgabe der vorliegenden Erfindung, ein verbessertes Verfahren und eine verbesserte Programmiereinrichtung zur Optimierung bzw. Hilfestellung bei der Optimierung von Quellcode für Computerprogramme, insbesondere für Computerprogramme von industriellen Automatisierungseinrichtungen, vorzuschlagen.

Es ist eine Kernidee der erfindungsgemäßen Lösung der vorgenannten Aufgabe, dass Informationen zur Unerreichbarkeit von Teilen eines Programmcodes, insbesondere zu übersprungenen oder nicht erreichbaren Anweisungen, Blöcken oder dgl., an Benutzer zurückgemeldet werden. Erfindungsgemäß soll dabei eine Datenflussanalyse des Quellcodes oder des erzeugten Zwischencode oder des erzeugten ausführbaren Programmcodes vorgenommen werden, wobei vorteilhaft Verzweigungen, insbesondere bedingte Verzweigungen, daraufhin analysiert werden sollen, ob davon abhängige Zweige des Syntaxbaumes beim Ablauf des Computerprogramms erreicht werden können, oder nicht. Erfindungsgemäß sollen die Anweisungen oder Anweisungs-Gruppen, die durch einen solchen Zweig des Quellcodes repräsentiert werden, im Quellcode markiert werden, so dass ein Benutzer auf die "Unerreichbarkeit" dieser Anweisungen hingewiesen wird. Alternativ kann auch eine automatische Bereinigung des Quellcodes stattfinden.

Die Aufgabe wird insbesondere durch ein Verfahren gemäß dem Patentanspruch 1 und durch eine Programmiereinrichtung gemäß dem Patentanspruch 8 gelöst.

Dabei ist ein Verfahren zur Optimierung von Quellcode für ein Computerprogramm einer industriellen Automatisierungskomponente vorgesehen, wobei der Quellcode mit einer Vielzahl von Anweisungen erstellt und in einem Übersetzungsvorgang in Zwischencode und/oder ausführbaren Code umgesetzt wird. Dabei wird während oder nach dem Erstellen des Quellcodes eine Datenflussanalyse des Quellcodes durchgeführt, wobei solche Anweisungen, welche nicht zur Ausführung kommen können, im Quellcode markiert werden. Durch ein solches Verfahren wird es einem Benutzer ermöglicht, Fehler im Programmcode aufzufinden und den Programmcode von nicht erreichbaren Anweisungen zu bereinigen, so dass sich ein besseres und übersichtlicheres Programm ergibt.

Die Erfindung sieht außerdem eine Programmiereinrichtung zur Optimierung von Quellcode vor, wobei die Programmiereinrichtung zur Eingabe oder Bearbeitung eines Quellcodes mit einer Vielzahl von Anweisungen eingerichtet ist, und wobei der Quellcode zur Umsetzung in einen Zwischencode und/oder einen ausführbaren Code mittels eines Übersetzungsvorgangs vorgesehen ist. Dabei ist die Programmiereinrichtung zur Durchführung einer Datenflussanalyse des Quellcodes oder des Computerprogramms während oder nach dem Erstellen des Quellcodes eingerichtet, wobei die Programmiereinrichtung zur Markierung solcher Anweisungen des Quellcodes, welche nicht zur Ausführung kommen können, eingerichtet ist. Mit einer solchen Programmiereinrichtung können die Vorteile realisiert werden, die bereits im Zusammenhang mit dem erfindungsgemäßen Verfahren diskutiert worden sind.

Vorteilhafte Ausgestaltungen der Erfindung und deren Vorteile sind in den abhängigen Patentansprüchen angegeben. Die dabei beschriebenen Merkmale und deren Vorteile können sowohl einzeln, als auch in Kombination miteinander realisiert werden.

Die Analyse des Programmcodes und damit des Quellcodes, bei der nicht erreichbare oder nicht zur Ausführung kommende Anweisungen aufgefunden werden sollen, geschieht vorteilhaft durch Anwendung eines Syntaxbaums, der aus dem Quellcode des Computerprogramms erstellt wird, was automatisch durch das Programmiersystem geschehen kann. Vorteilhaft enthält jeder Zweig des Syntaxbaums eine Anweisung oder eine Gruppe von Anweisungen, wobei eine solcher Zweig bedingt ausgeführt werden kann, also beispielsweise durch eine If-Then-Bedingung, oder wobei ein Zweig auch mittels einer "Goto"-Anweisung oder dgl. übersprungen werden kann. Die Datenflußanalyse anhand des Quellcodes bzw. des daraus "im Hintergrund" während des Editierens erzeugten bzw. aktualisierten Syntaxbaums hat weiter den Vorteil, dass beim nachfolgenden Übersetzungsvorgang (Compilieren) eine Optimierung hinsichtlich der Bereinigung nicht genutzten Codes entfallen kann; das Compilieren erfolgt dadurch also schneller und generiert auch weniger Fehler- oder Hinweismeldungen. Dazu kann der Editor dem Compiler eine Information, beispielsweise ein "Flag", übergeben, die angibt, dass der Code schon entsprechend bereinigt ist und eine entsprechende Analyse entfallen kann.

Vorteilhaft wird bei der Datenflussanalyse anhand des Syntaxbaums bei bedingten Verzweigungen die der Bedingung zugrunde liegende Variable oder die zugrunde liegenden Variablen ausgewertet, wobei festgestellt wird, ob der mögliche Wertebereich dieser Variablen durch vorangegangene Anweisungen möglicherweise derart eingeschränkt ist, dass die Bedingung nie erfüllt sein kann, oder möglicher Weise sogar immer erfüllt ist, was die Bedingung selbst überflüssig macht, was ebenfalls angezeigt werden soll. Vorteilhaft ist jeder Zweig des Syntaxbaums mit einer Anzahl von Zeilen im Quellcode verknüpft, wobei diese Zeilen entsprechend automatisch markiert werden sollen, sofern der damit verknüpfte Zweig des Syntaxbaums nicht zur Ausführung kommen kann.

Die Datenflussanalyse und damit die Markierung nicht erreichbarer Stellen im Programmcode bzw. Quellcode kann vorteilhaft während der Erstellung bzw. der Bearbeitung des Quellcodes wiederholt durchgeführt werden, vorteilhaft im Hintergrund, so dass der Benutzer dabei weiter arbeiten kann. Dabei werden bei dieser fortwährenden Datenflussanalyse die gerade in Bearbeitung befindlichen, unvollständigen Anweisungen bzw. Anweisungsblöcke (Programmfragmente) nicht berücksichtigt, um unnötige Fehlermeldungen zu vermeiden. Die Datenflussanalyse kann auch getriggert werden durch bestimmte Eingaben eines Benutzers, beispielsweise bei Vollendung eines Programmblocks, eines Anweisungs-Blocks (z.B. Fertigstellung einer If-Then-Struktur), oder nach dem Löschen oder Bearbeiten von Verzweigungsanweisungen.

Das Verfahren und die Programmiereinrichtung wird vorteilhafterweise für industrielle Programmiersprachen nach IEC 61131/3 eingesetzt, insbesondere bei SCL (Structured Control Language), wobei sich der Vorteil ergibt, dass viele graphische Programmiersprachen, die zur Programmierung industrieller Automatisierungskomponenten (PLC - Programmable Logic Controller) eingesetzt werden, auch in SCL dargestellt werden können. Dabei ergibt sich in SCL für einen Benutzer eine übersichtlichere Möglichkeit bei der Bereinigung und Überarbeitung des Programmcodes, wenn die erfindungsgemäßen Verfahren zur Anzeige nicht erreichbarer Stellen im Programmcode eingesetzt werden, als in den graphisch orientierten Programmsprachen wie KOP oder FUP.

Ausführungsbeispiele des erfindungsgemäßen Verfahrens werden nachfolgend anhand der Zeichnung erläutert; diese dienen gleichzeitig der Erläuterung eines Ausführungsbeispiels für eine erfindungsgemäße Programmiereinrichtung.

Dabei zeigen:
- Figuren 1 und 2: Beispiele für nicht erreichbaren Programmcode,
- Figur 3: die Abbildung von Anweisungen eines Quellcodes auf einen Syntaxbaum der Programmiersprache SCL anhand des Beispiels aus der Figur 2,
- Figur 4: ein erstes Beispiel für die Markierung von unerreichbaren Programmcode anhand des Beispiels aus der Figur 1, und
- Figur 5: ein weiteres Beispiel zur Darstellung unerreichbaren Programmcodes.

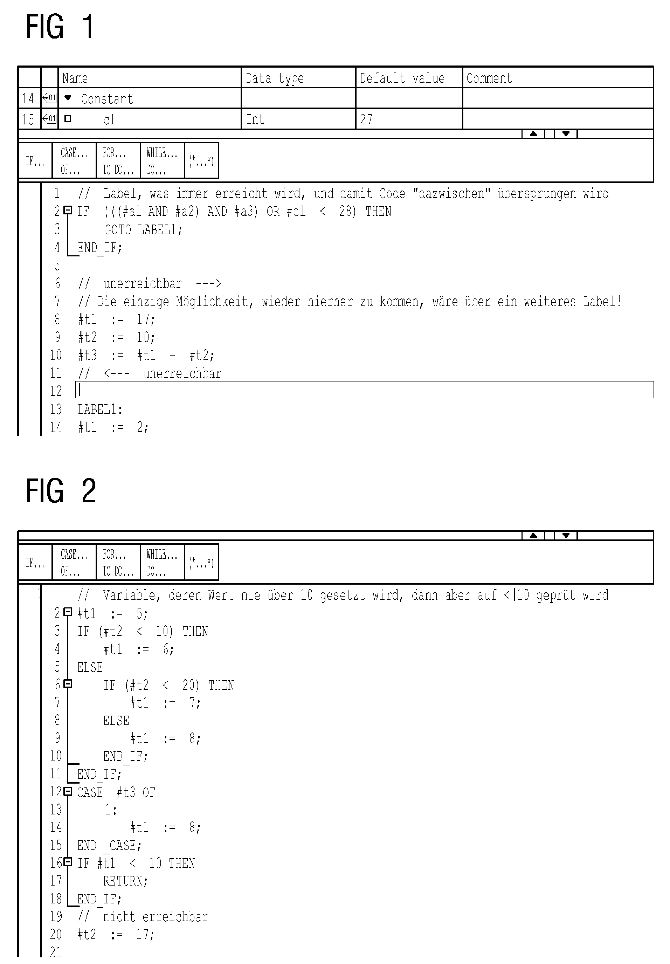

In den Figuren 1 und 2 sind zwei einfache Beispiele von Quellcode-Fragmenten eines industriellen Automatisierungsprogramms gezeigt, die Anweisungen bzw. Anweisungs-Blöcke enthalten, die bei der späteren Programmausführung niemals zur Abarbeitung gelangen werden. In der Figur 1 ist beispielsweise in der Zeilennummer 3 eine Sprunganweisung "GOTO LABEL1" zu finden, die zu der entsprechenden Sprungmarke "LABEL1" in der Zeile 13 springt. Dadurch sind die Anweisungen in den Zeilen 8 bis 10 nicht "erreichbar", das heißt, dass diese Anweisungen nicht zur Ausführung kommen können.

Die Figur 2 zeigt ein weiteres Beispiel, wobei in den Zeilen 2 bis 15 verschiedene Anweisungen zeigen, die verschiedene Werte zu der Variablen "t1" zuweisen. Folglich kann in diesem Programmabschnitt die Variable "t1" nur die Werte 5, 6, 7 oder 8 annehmen. Die bedingte "If-Then-Verzweigung" im Zeilenblock 16 bis 18 prüft den Inhalt der Variablen "t1", ob der Wert unter 10 ist, was jedoch immer der Fall ist. Deshalb wird die Anweisung "RETURN" in der Zeile 17 immer durchgeführt, so dass die Anweisung in Zeile 20 niemals ausgeführt wird.

Anhand der Figuren 1 und 2 sind zwei sehr einfache Beispiele für die Nicht-Erreichbarkeit von Programmcode am entsprechenden Quellcode nachgewiesen worden; selbstverständlich können auch weitaus komplexere und damit auch unübersichtlichere Szenarien zu nicht ausgeführtem Programmcode führen.

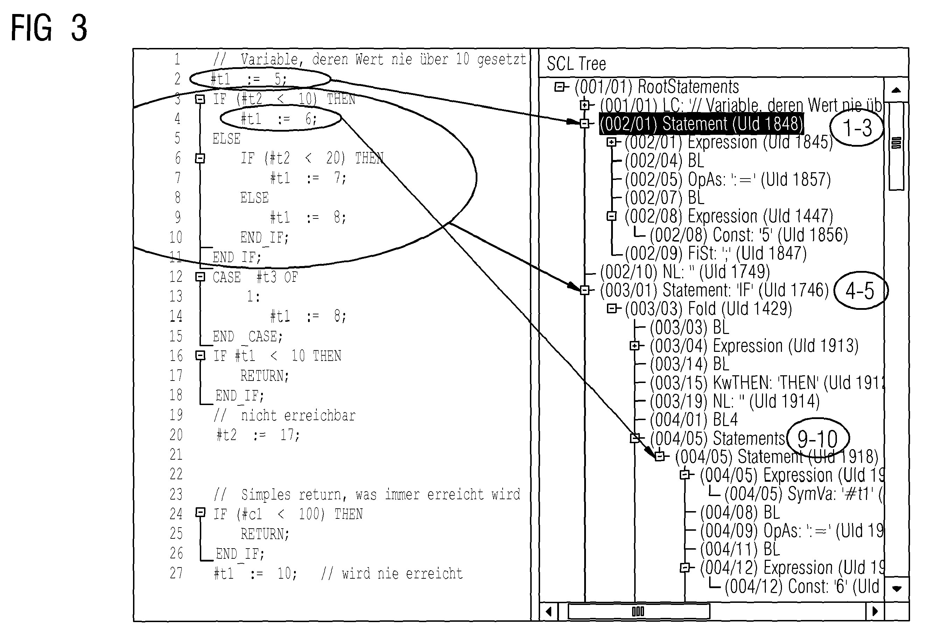

Anhand der Figur 2 soll im Weiteren erläutert werden, wie die Abbildung von Quellcode (linke Seite der Figur 3) auf einen Syntaxbaum (rechte Seite der Figur 3) anhand von gespeicherten Zeilennummern geschehen kann. Dazu sei angenommen, dass als Programmiersprache für den Quellcode die Sprache "SCL" verwendet wird, wobei durch einen integrierten Compiler der Benutzeroberfläche ein Syntaxbaum zur Erstellung eines Zwischencodes, in diesem Beispiel der Programmiersprache "MC7+", erstellt bzw. laufend aktualisiert wird. Dabei ist für Quellcode in der Programmiersprache SCL zum Zeitpunkt der Zwischen-Übersetzung ein abstrakter Syntaxbaum (SCL-Tree) vorhanden, der den von dem Benutzer eingegebenen Programmcode bzw. Quellcode repräsentiert. Dieser Syntaxbaum wird durch "Parsen" der Nutzereingaben (Quellcode) also bereits vor dem Kompilieren des Zwischencodes und des endgültigen ausführbaren Maschinencodes erstellt. Da jede Anweisung "Statement" in den Quellcode der Programmiersprache SCL nacheinander übersetzt bzw. "geparst" werden, kann im jeweils dazu passenden "Statement-Knoten" im Syntaxbaum während der Zwischen-Übersetzung die Information hinterlegt werden, welches Stück oder Fragment des (nicht dargestellten) Zwischencodes (MC7+ - Codes) daraus generiert wurde. Die Start-Zeilennummer und Ende-Zeilennummer des MC7+ -Fragments wird dabei innerhalb oder zu dem MC7+ -Zwischencode notiert. Diese "im Hintergrund" den verschiedenen Knoten des Syntaxbaums zugeordneten Zeilennummernbereiche sind in der Figur 3 nicht dargestellt.

Die zum Auffinden unerreichbarer Stellen im Programmcode verwendete Datenflussanalyse wird auf den gesamten MC7+ -Zwischencode angewendet, wodurch sichergestellt ist, dass beispielsweise die für bedingte Verzweigungen verwendeten Variablen hinsichtlich deren möglicher Einschränkungen ihres Wertebereichs möglichst vollständig erfasst werden; in einer alternativen Ausführungsform kann sich die Datenflussanalyse auch auf den Syntaxbaum selbst beschränken, ohne den Zwischencode erzeugen und analysieren zu müssen. Die dabei gefundenen Einschränkungen (constraints) für die Wertebereiche werden dabei mit den Anweisungen der bedingten Verzweigungen abgeglichen, wobei Zweige oder Teile von Zweigen des Syntaxbaums als nicht erreichbar identifiziert werden können. Die dabei gefundenen, unerreichbaren Zweige oder Teile von Zweigen des MC7+ -Zwischencodes werden als Liste von Zeilennummern-Paaren gespeichert. Mit diesen Informationen wird dann noch einmal der Syntaxbaum "durchlaufen", wobei die gespeicherte Start- und Endezeile jeder generierten Anweisung (MC7+ -Statement) mit der Liste von Paaren abgeglichen wird. So erhält man die Information, ob ggf. nur Teile des MC7+ -Statements unerreichbar sind, oder das Statement komplett unerreichbar ist. Sofern das komplette Statement unerreichbar ist, wird dies im Syntaxbaum vermerkt. Dem Benutzer kann die Unerreichbarkeit damit in seinem Quellcode-Editor angezeigt werden, da der Syntaxbaum auch genau die Informationen speichert, aus der dem Benutzer wieder die Textform der Quelle im Editor generiert wird. In alternativen Ausführungsformen kann auch ein zu markierender Zeilennummernbereich dem Editor übermittelt werden. Nicht erreichbare Anweisungen (Statements) können also beispielsweise ausgegraut oder mit einer Markierung samt entsprechender Klartextanzeige "Tooltip" versehen werden. Sind nur Teile des MC7+ -Zwischencodes einer Anweisung ("Statements") unerreichbar, wird das Statement nicht als unerreichbar markiert, weil in einem solchen Fall nicht immer eine eindeutige Zuordnung zwischen dem Teilbereich des nicht erreichbaren Statements und dem zugehörigen Anteil des MC7+ -Zwischencodes und damit auch des SCL-Quellcodes des Statements möglich ist.

Damit ist es möglich, bereits nach einer erfolgten Zwischen-Übersetzung einem Benutzer die Information darüber anzuzeigen, welche Anweisungen im Quellcode unerreichbar sind.

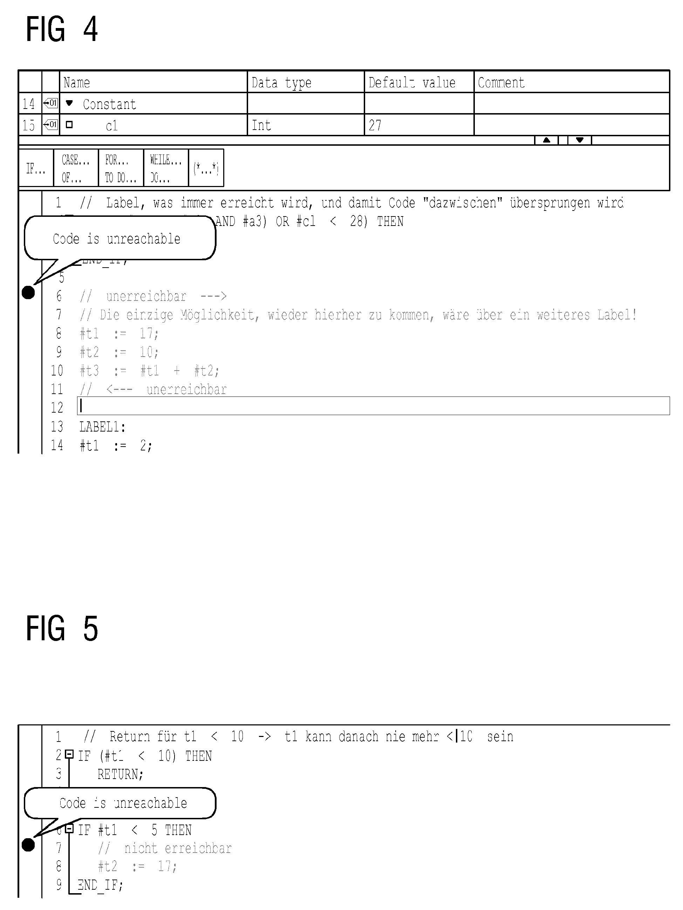

In den Figuren 4 und 5 sind Beispiele gezeigt, wie eine solche Markierung aussehen kann. In der Figur 4, die sich auf das Beispiel der Figur 1 bezieht, sind die nicht erreichbaren Zeilen 6 bis 11 ausgegraut, zusätzlich ist ein "Tooltip" mit der Beschriftung "Code is unreachable" dargestellt. Analog dazu sind im Beispiel der Figur 5 die Zeilen 7 und 8 ausgegraut und mit einem entsprechenden "Tooltip" versehen.

Durch eine Datenflussanalyse des im linken Teil der Figur 3 exemplarisch dargestellten SCL-Syntaxbaums anstelle einer Analyse von MC7+ -Zwischencodes kann die "Unerreichbarkeit-Analyse" auch schon während der Eingabe von Anweisungen im Quellcode stattfinden. Dazu wird im Hintergrund wiederholt die Datenflussanalyse durchgeführt. Wenn alle Anweisungen bzw. Anweisungsgruppen (Statements) vollständig sind, also keine Parser-Fehler beim Erstellen des abstrakten Syntaxbaums auftreten, kann also einem Benutzer bereits vor Auslösen des eigentlichen Compilierungsvorgangs rückgemeldet werden, welche Stellen im Quellcode und damit im erzeugten Programmcode unterreichbar sein werden und beispielsweise sogar eine Kompilierung verhindern könnten. Auch in einem Zustand, in dem nicht alle Anweisungen und Statements vollständig sind oder solche Anweisungen oder Statements Fehler aufweisen, kann dennoch eine Unerreichbarkeitsanalyse durchgeführt werden. Das ist beispielsweise der Fall, wenn ein Benutzer gerade innerhalb eines Statements Änderungen vornimmt oder neue, noch unvollständige Anweisungen (Fragmente) hinzufügt, und dadurch Fehler beim Parsen des Quellcodes auftreten. Zur Analyse eines solchen fehlerhaften, fragmentarisch vorliegenden Quellcodes kann das aktuelle, unvollständige oder fehlerhafte Statement markiert und von der Analyse ausgenommen werden. Dies kann auch ein nachfolgendes, eigentlich vollständiges Statement einschließen, da der Parser nach einem Abschlusszeichen (z. B. ";") des fragmentarischen Statements sucht und dieses Abschlusszeichen dann erst am Ende des nächsten, eigentlich vollständigen Statements findet. Auch wenn die darauf beruhende Analyse nicht vollständig sein kann, kann einem Benutzer trotzdem bereits ein hilfreicher Hinweis gegeben werden. Somit kann der Benutzer dann anhand der Informationen den Quellcode optimieren oder eine automatische Optimierung stattfinden.

Wie zuvor beschrieben, können konstante Ausdrücke oder Verzweigungen daraufhin überprüft werden, ob sie immer wahr oder immer falsch sind, um daraus zu folgern, welche Teile des Programmcodes (Quellcodes) unerreichbar sind. Eine solche Analyse kann jedoch auch Variablen umfassen. Dazu kann in der Datenflussanalyse vermerkt werden, welche Werte die Variablen in den möglichen Zweigen des Programmflusses annehmen können, bzw. welche Werte nicht mehr möglich sind. Damit kann bei einem nächsten Vergleich der Variable mit einer Konstante überprüft werden, ob der Wert der Konstanten überhaupt in der Menge der an dieser Stelle noch möglichen Werte für die Variable vorkommt. Sofern dies nicht der Fall ist, ist ein Vergleich auf Gleichheit dann immer falsch bzw. ein Vergleich auf Ungleichheit immer wahr. Genauso können größer- oder kleiner-Vergleiche immer wahr oder immer falsch sein, wenn die Variable eine solche Einschränkung notiert hat. Dies ist beispielsweise im Beispiel der Figur 2 gegeben. Im Falle des Vergleichs zweier Variablen ist die Schnittmenge aus möglichen Werten zu bilden. Ist diese leer, so ist wiederum beispielsweise ein Vergleich auf Gleichheit immer falsch. Hinter diesen Vergleichen folgt also unerreichbarer Programmcode. Ein solcher Fall ist in der Figur 5 dargestellt.

Die Informationen, die eine Datenflussanalyse des SCL-Quellcodes bzw. des SCL-Syntaxbaums hervorbringt, werden also dem Benutzer in Form von Markierungen und Erläuterungen des Quellcodes zurückgemeldet. Dazu ist keine komplette Kompilierung des Programmcodes erforderlich, sondern lediglich ein Durchlaufen des Syntaxbaums.

## Patentansprüche

1. Verfahren zur Optimierung von Quellcode für ein Computerprogramm einer industriellen Automatisierungskomponente, wobei der Quellcode eine Vielzahl von Anweisungen umfasst und in einem Übersetzungsvorgang in Zwischencode und/oder ausführbaren Code umgesetzt wird,
**dadurch gekennzeichnet,**
**dass** während oder nach dem Erstellen des Quellcodes eine Datenflussanalyse des Quellcodes durchgeführt wird,
wobei solche Anweisungen, welche nicht zur Ausführung kommen können, im Quellcode markiert werden.

2. Verfahren nach Patentanspruch 1,
**dadurch gekennzeichnet,**
**dass** im Zuge der Erstellung des Quellcodes ein Syntaxbaum des Computerprogramms erstellt oder aktualisiert wird, wobei zum Auffinden der nicht zur Ausführung kommenden Anweisungen der Syntaxbaum hinsichtlich nicht erreichbarer Zweige untersucht wird, und
wobei die diesen Zweigen entsprechenden Anweisungen im Quellcode als nicht zur Ausführung kommende Anweisungen markiert werden.

3. Verfahren nach Patentanspruch 2,
**dadurch gekennzeichnet,**
**dass** bei der Untersuchung des Syntaxbaums bei bedingten Verzweigungen mögliche Einschränkungen des Wertes der einer Bedingung für die Verzweigung zugrunde liegenden Variable in den der Verzweigung im Programmfluss vorangehenden Anweisungen ausgewertet werden.

4. Verfahren nach einem der vorhergehenden Patentansprüche, **dadurch gekennzeichnet,**
**dass** die Datenflussanalyse während des Erstellens oder während des Änderns des Quellcodes wiederholt automatisch durchgeführt wird, insbesondere in Form einer Hintergrundaufgabe während der Bearbeitung des Quellcodes durch einen Benutzer.

5. Verfahren nach Patentanspruch 4,
**dadurch gekennzeichnet,**
**dass** bei der Datenflussanalyse oder für die Markierung in Bearbeitung befindliche Anweisungen oder unvollständig programmierte Anweisungen ausgespart werden.

6. Verfahren nach einem der vorhergehenden Patentansprüche 4 oder 5,
**dadurch gekennzeichnet,**
**dass** die Datenflussanalyse durch eine Benutzereingabe ausgelöst wird, insbesondere durch Vollendung einer Anweisung oder eines Anweisungsblocks oder die Eingabe einer Verzweigungsanweisung.

7. Verfahren nach einem der vorhergehenden Patentansprüche,
**dadurch gekennzeichnet,**
**dass** für die Erstellung des Quellcodes eine Programmiersprache gemäß IEC 61131/3, insbesondere SCL, verwendet wird.

8. Programmiereinrichtung zur Erstellung eines Computerprogramms für eine industrielle Automatisierungskomponente, wobei die Programmiereinrichtung zur Eingabe oder Bearbeitung eines Quellcodes mit einer Vielzahl von Anweisungen eingerichtet ist, und
wobei der Quellcode zur Umsetzung in einen Zwischencode und/oder einen ausführbaren Code mittels eines Übersetzungsvorgangs vorgesehen ist,
**dadurch gekennzeichnet,**
**dass** die Programmiereinrichtung zur Durchführung einer Datenflussanalyse des Quellcodes oder des Computerprogramms während oder nach dem Erstellen des Quellcodes eingerichtet ist,
wobei die Programmiereinrichtung zur Markierung solcher Anweisungen des Quellcodes, welche nicht zur Ausführung kommen können, eingerichtet ist.

9. Programmiereinrichtung nach Patentanspruch 8,
**dadurch gekennzeichnet,**
**dass** die Programmiereinrichtung zur Erstellung oder Aktualisierung eines Syntaxbaumes im Zuge des Erstellens des Quellcodes eingerichtet ist,
wobei die Programmiereinrichtung dazu eingerichtet ist, zum Auffinden der nicht zur Ausführung kommenden Anweisungen den Syntaxbaum hinsichtlich nicht erreichbarer Zweige zu untersuchen und die diesen Zweigen entsprechenden Anweisungen im Quellcode als nicht zur Ausführung kommende Anweisungen zu markieren.

10. Programmiereinrichtung nach Patentanspruch 9,
**dadurch gekennzeichnet,**
**dass** die Programmiereinrichtung dazu eingerichtet ist, bei der Analyse des Syntaxbaums bei bedingten Verzweigungen mögliche Einschränkungen des Wertes der einer Bedingung der bedingten Verzweigung zugrundeliegenden Variablen auszuwerten.

11. Programmiereinrichtung nach einem der Patentansprüche 8 bis 10,
**dadurch gekennzeichnet,**
**dass** die Programmiereinrichtung zur wiederholten automatischen Durchführung der Datenflussanalyse während des Erstellens des Quellcodes eingerichtet ist,
wobei insbesondere die Durchführung der Datenflussanalyse als Hintergrundaufgabe während der Bearbeitung des Quellcodes durch einen Benutzer vorgesehen ist.

12. Programmiereinrichtung nach Patentanspruch 11,
**dadurch gekennzeichnet,**
**dass** vorgesehen ist, bei der Datenflussanalyse oder der Markierung solche Anweisungen oder Anweisungsfragmente, die sich in unmittelbarer Bearbeitung befinden, auszusparen.

13. Programmiereinrichtung nach einem der Patentansprüche 11 oder 12,
**dadurch gekennzeichnet,**
**dass** die Programmiereinrichtung zum Start der Datenflussanalyse in Reaktion auf eine Benutzereingabe eingerichtet ist,
wobei als Benutzereingabe insbesondere die Eingabe oder Vollendung einer Anweisung oder eines Anweisungsblocks oder einer Verzweigungsanweisung vorgesehen ist.

14. Programmiereinrichtung nach einem der Patentansprüche 8 bis 13,
**dadurch gekennzeichnet,**
**dass** die Programmiersprache für den Quellcode eine Sprache nach IEC 61131/3, insbesondere SCL, ist.
